# EUROPÄISCHE PATENTANMELDUNG

(11) **EP 0 762 037 A1**
(43) Veröffentlichungstag der Anmeldung: **12.03.1997**
(21) Anmeldenummer: 96113660.3
(22) Anmeldetag: 26.08.1996
(51) Int. Cl.: F16L 37/088, F16L 19/02

(54) **Rohrverschraubung**

(30) Priorität: 07.09.1995 DE 19533106
(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Rohrverschraubung mit einer auf einem Rohrstutzen (1) angeordneten Überwurfmutter (5), die mittels eines Sprengrings (4) gehalten ist. Um eine Verwendung des Rohrstutzens ohne Überwurfmutter und die Montage einer gegebenenfalls gewünschten Überwurfmutter vor Ort zu gestatten, weist der Rohrstutzen ein Rohrgewinde (2) und die Überwurfmutter an ihrem mit dem Sprengring zusammenwirkenden Bund ein dazu passendes Gewinde (9) auf. Sie ist außerdem an ihrem hinteren Ende mit einem Hohlkonus (7) zu Zusammendrücken des Sprengrings bei der Montage versehen. Durch Aufschrauben der Überwurfmutter auf das Rohrgewinde des Stutzens kann der Bund leicht über den Sprengring hinwegbewegt und in Montagestellung gebracht werden.

## Beschreibung

Bei Rohrverschraubungen wird die Überwurfmutter im allgemeinen durch einen am zugehörigen Rohrstutzen vorgesehenen Bund gehalten. Diese Möglichkeit besteht nicht, wenn der Rohrstutzen unlösbar von einem Teil größeren Durchmessers ausgeht, beispielsweise von einem Wasserzählergehäuse. In diesen Fällen wird der Bund durch einen Sprengring ersetzt, der mit dem inneren Teil seiner radialen Abmessung in einer Nut des Rohrstutzens liegt und mit dem äußeren Teil seiner radialen Abmessung vor einen Bund der Überwurfmutter greift. Zur Montage ist die Überwurfmutter an ihrem hinteren Ende mit einem Hohlkonus versehen, der beim Überschieben der Überwurfmutter auf den Stutzen den in der Nut des Stutzens festgehaltenen Sprengring übergreift und bei seiner weiteren Bewegung zusammendrückt, bis der Ring durch den an der Überwurfmutter angeordneten Bund hindurchgegangen ist und vor diesem wieder aufschnappt. Diese Montage läßt sich nur mit besonderen Hilfsmitteln, z. B. Handhebelpressen, in Industriebetrieben herstellen. Bei Wasserzählern ist es erforderlich, unterschiedliche Verschraubungen anwenden zu können. Das bedeutet, daß ein und derselbe Zählertyp in mehreren Ausführungen mit jeweils unterschiedlicher Verschraubung vorrätig gehalten werden muß.

Der Erfindung liegt die Aufgabe zugrunde, eine Verschraubung zu schaffen, die nicht auf die Verwendung einer bestimmten, zuvor montierten Überwurfmutter festgelegt ist.

Die erfindungsgemäße Lösung besteht in den Merkmalen des Anspruchs 1 und vorzugsweise denjenigen der Unteransprüche.

Die Erfindung hält an dem Prinzip fest, daß am Rohrstutzen eine Nut vorgesehen ist, die einen Sprengring zum Halten einer Überwurfmutter aufnehmen kann. Vor dieser Nut ist ein Rohrgewinde angeordnet, so daß derselbe Stutzen (ohne Überwurfmutter) in eine am Partnerteil vorgesehene Muffe eingeschraubt oder mit einer am Partnerteil vorgesehenen Überwurfmutter verbunden werden kann. Er kann aber auch selbst mit einer Überwurfmutter versehen werden, wobei der Montagevorgang keinerlei Spezialwerkzeuge oder -kenntnisse verlangt. Die Überwurfmutter ist im Bereich ihres hinteren Bundes mit einem Gewinde versehen, das komplementär zu dem Rohrgewinde des Stutzens ausgebildet ist. Sie weist an ihrem hinteren Ende außerdem einen Hohlkonus zum Zusammendrücken des Sprengrings bei der Montage auf. Will man eine Überwurfmutter auf den Rohrstutzen aufbringen, so legt man in die Nut des Rohrstutzens den Sprengring ein, schraubt die Überwurfmutter mit dem in ihrem Bund vorgesehenen Gewinde auf das Rohrgewinde des Rohrstutzens, bis der Hohlkonus den Sprengring erreicht und diesen außen umfaßt und zentriert. Während der Sprengring durch die hintere, steile Flanke der Nut festgehalten wird, schiebt sich bei weiterer Verschraubung der Überwurfmutter der Hohlkonus über den Sprengring, drückt diesen zusammen, bis schließlich der Bund der Überwurfmutter über den Sprengring hinweggleitet. Die zusammenwirkenden Gewinde des Rohrstutzens und der Überwurfmutter gestatten es, den Sprengring über den Hohlkonus mit großer Kraft zusammenzudrücken, so daß Spezialwerkzeuge, die sonst zu diesem Zweck benutzt werden, entbehrlich sind. Sobald der Sprengring im Inneren des Bundes der Überwurfmutter liegt, und dieser den Eingriff mit dem Rohrstutzengewinde verloren hat, genügt ein kurzer Schlag mit der Hand, um den Bund über den Sprengring hinweggleiten zu lassen und den Sprengring in der vor dem Bund gelegenen Durchmessererweiterung aufspringen zu lassen. Damit ist die gewünschte Montagestellung erreicht.

Damit der Sprengring während des Zusammendrückens durch den Hohlkonus von der Nut festgehalten wird, soll deren hintere Flanke nicht nur steil sein sondern soll auch der mittlere Durchmesser des entspannten Sprengrings nicht größer sein als der Außendurchmesser der hinteren Nutflanke.

Die vordere Flanke des an der Überwurfmutter vorgesehenen Bundes ist gleichfalls steil, soweit sie nicht in ihrem radial weiter innen liegenden Bereich vom Gewindegang durchbrochen ist. Diese Flanke drängt den Sprengring unter den Verschraubungskräften noch vorne gegen die vordere, konische Flanke der ihn aufnehmenden Nut, die ihn zentriert und nach außen drängt, bis er am Innenumfang der Überwurfmutter Anlage findet.

Für die Haltewirkung des Sprengrings ist es unschädlich, wenn dieser am Bund der Überwurfmutter oder der vorderen Flanke der Nut lediglich in einen Gewindebereich anliegt. Jedoch kann man die Anordnung so einrichten, daß seine Anlageflächen von im wesentlichen gewindefreien Bereichen gebildet werden.

Sobald die Verschraubungskräfte wirken, zentriert die vordere, stark geneigte Nutflanke, die einen Konus bildet, den Sprengring gegenüber der sich an ihm abstützenden vorderen Flanke des in der Überwurfmutter vorgesehenen Bundes.

Die obige Erläuterung geht davon aus, daß die den Sprengring aufnehmende Nut am Rohrstutzen angeordnet ist, während der mit dem Sprengring zusammenwirkende Konus an der Überwurfmutter vorgesehen ist. Die Anordnung kann aber auch umgekehrt werden, indem die den Sprengring haltende Nut an der Überwurfmutter und der Montagekonus am vorderen Ende des Rohrstutzens angeordnet wird. Der Montagekonus spreizt dann während der Montage den Sprengring auf, so daß er in der Tiefe der in der Überwurfmutter vorgesehenen Nut zu liegen kommt und der Gewindeabschnitt des Rohrstutzens durch ihn hindurchgleiten kann. Am hinteren Ende des Gewindeabschnitts des Rohrstutzens ist eine Bundflanke vorgesehen, an der sich der Sprengring gegenüber den Verschraubungskräften abstützen kann.

Die Angaben "hinten" und "vorne" bedeuten im vorliegenden Zusammenhang stets die vom freien Ende wegführende bzw. die zu ihm hinweisende Richtung.

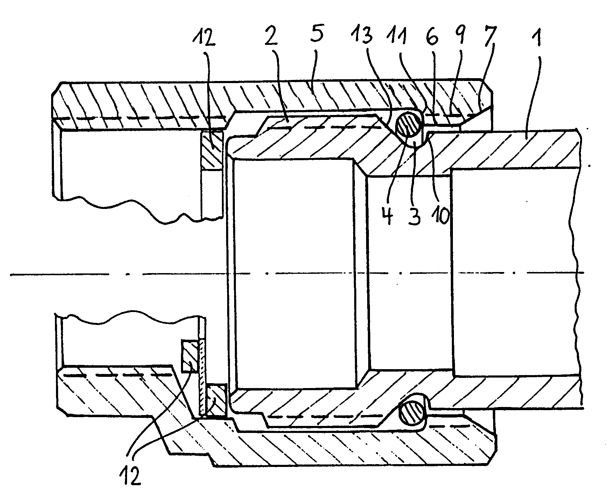

Die Erfindung wird im folgenden näher unter Bezugnahme auf die Zeichnung erläutert, die ein vorteilhaftes Ausführungsbeispiel im Längsschnitt veranschaulicht.

Der Rohrstutzen 1 mag an seinem hinteren, nicht gezeigten Ende mit einem Teil größeren Durchmessers, beispielsweise einem Wasserzählergehäuse, verbunden sein. Er besitzt an seinem vorderen Ende ein Rohrgewinde 2, das es gestattet, ihn in eine Gewindemuffe einzuschrauben oder mit einer am Partnerrohr vorgesehenen Überwurfmutter zu verbinden. In diesem Fall trägt er selbst keine Überwurfmutter. Jedoch kann er gewünschtenfalls leicht mit einer Überwurfmutter versehen werden. Die Zeichnung zeigt in der oberen und unteren Hälfte verschiedene Mutterformen, um zu zeigen, daß der Monteur je nach Lage des Falles frei wählen kann.

Hinter dem Rohrgewinde 2 des Stutzens 1 ist eine Nut 3 vorgesehen, die einen Sprengring 4 aufnehmen kann, der die Überwurfmutter 5 festhält. Zu diesem Zweck ist die Überwurfmutter 5 an ihrem hinteren Ende mit einem Bund 6 versehen, der hinter den Sprengring 4 greift. Außerdem weist die Überwurfmutter an ihrem hinteren Ende eine hohlkonisch ausgebildete Montageschräge 7 auf, die in ihrem weitesten Bereich den Sprengring 4 im entspannten Zustand zu umfassen vermag. Der Bund 6 ist mit einem Innengewinde 9 versehen, das komplementär dem Rohrgewinde 2 des Rohrstutzens ausgebildet ist. Will man die Überwurfmutter 5 auf dem Rohrstutzen montieren, so schraubt man den Bund 6 mit dem Gewinde 9 über das Rohrgewinde 2, legt den Sprengring 4 in die Nut 3 ein und schraubt die Überwurfmutter 5 mit ihrem Hohlkonus 7 über den Sprengring 4 hinweg.

Dabei wird dieser von der hinteren, steilen Flanke 10 der Nut 3 festgehalten und durch den Hohlkonus 7 zentriert. Der Mitteldurchmesser des Sprengrings 4 (das arithmetische Mittel zwischen seinem Innen- und Außendurchmesser) soll im entspannten Zustand etwa dem Außendurchmesser der hinteren Flanke 10 der Nut 3 und dem Innendurchmesser des Bundes 6 gleichen, die sich nur durch ein geringes Spiel unterscheiden. Die elastische Zusammendrückung des Sprengrings bereitet keine Schwierigkeiten und bedarf keiner Spezialwerkzeuge, weil es dank der zusammenwirkenden Gewinde 2 und 9 und der entsprechend gewählten Neigung des Hohlkonus 7 lediglich geringer, mit der Hand oder üblichen Werkzeugen aufbringbarer Kräfte bedarf.

Die Nut 3 muß eine hinreichende Tiefe haben, damit der Sprengring 4 beim Überschieben des Bunds 6 tief genug ausweichen kann.

Der Bund 6 bzw. das Gewinde 9 ist mindestens so lang wie der Abstand zwischen dem hinteren Ende des Gewindes 2 und der hinteren Flanke 10 der Nut 3, damit sichergestellt ist, daß der Sprengring 4 vollständig zusammengedrückt ist und sich innerhalb des Bunds 6 befindet, wenn dieser das hintere Ende des Gewindes 2 erreicht. Es genügt dann in der Regel ein leichter Schlag mit der Hand auf das vordere Ende der Überwurfmutter 5, um den Bund 6 gänzlich über den Sprengring 4 hinwegzuschieben. Dieser springt dann vor der vorderen Flanke 11 des Bunds 6 elastisch auf und sichert nun die Überwurfmutter 5 auf dem Rohrstutzen 1.

Wenn diese mit einem Partnerrohr verschraubt wird, wobei dessen Stirn über die Dichtringe 12 Verschraubungskräfte auf das vordere Ende des Rohrstutzens 1 überträgt, müssen diese von der vorderen Flanke 13 der Nut 3 über den Sprengring 4 auf die vordere Flanke 11 des Bunds 6 übertragen werden. Die Flanke 13 ist stark gegenüber der Radialrichtung geneigt, beispielsweise unter einem Winkel von 30° bis 60°, vorzugsweise 40° bis 50°. Die Flanke 11 schiebt ihn auf die konische Flanke 13, wodurch er zentriert und aufgeweitet wird, bis er am Innenumfang der Überwurfmutter und an einem weiter außen liegenden, ggf. gewindefreien Bereich der Flanke 11 anliegt. Ebenso sollte er vorzugsweise mit dem gewindefreien Bereich der Flanke 13 zusammenwirken. Damit dies möglich ist, sollte der gewindefreie Bereich der Flanke 11 eine radiale Ausdehnung haben, die nicht wesentlich kleiner ist als der halbe Drahtdurchmesser des Sprengrings. Sie kann umso kleiner sein, je stärker die Flanke 13 geneigt ist.

Der Drahtdurchmesser des Sprengrings 4 ist zweckmäßigerweise so groß, daß er bei gegebener Neigung der Flanke 13 den radialen Abstand zwischen den gewindefreien Bereichen der Flanken 11 und 13 nahezu zu überbrücken vermag. Wie bereits gesagt, ist dies aber nicht unbedingt erforderlich, da auch eine vollständige oder teilweise Anlage des Sprengrings an den Gewindebereichen der Flanken 11 und 13 hinreichende Abstützung gewährleistet.

## Patentansprüche

1. Rohrverschraubung mit einer auf einem Rohrstutzen (1) angeordneten Überwurfmutter (5), die an dem Rohrstutzen (1) mittels eines Sprengrings (4) gehalten ist, der in einer am Rohrstutzen (1) vorgesehenen Nut (3) und vor einem an der Überwurfmutter (5) vorgesehenen Bund (6) liegt, dadurch gekennzeichnet, daß der Rohrstutzen (1) auf dem zwischen der Nut (3) und seinem vorderen Ende gelegenen Abschnitt ein Gewinde (2) und die Überwurfmutter (5) in ihrem Bund (6) ein dazu passendes Gewinde (9) aufweist, und daß die Überwurfmutter (5) an ihrem hinteren Ende mit einem nach außen sich öffnenden Hohlkonus (7) zum Zusammendrücken des Sprengrings bei der Montage versehen ist.

2. Rohrverschraubung nach Anspruch 1, dadurch gekennzeichnet, daß die den Sprengring aufnehmende Nut (3) eine hintere, steile Flanke (10) aufweist.

3. Rohrverschraubung nach Anspruch 1 oder 2, dadurch gekennzeichnet, daß der entspannte Mitteldurchmesser des Sprengrings (4) etwa so groß ist wie der Außendurchmesser der hinteren Flanke (10) der Nut (3).

4. Rohrverschraubung nach einem der Ansprüche 1 bis 3, dadurch gekennzeichnet, daß die Nut (3) eine vordere, stark geneigte Flanke (13) aufweist.

5. Rohrverschraubung nach einem der Ansprüche 1 bis 4, da durch gekennzeichnet, daß die Nut (3) in der Überwurfmutter (5) und statt des Hohlkonus (7) am vorderen Ende des Rohrstutzens (1) ein Konus angeordnet ist.

6. Rohrverschraubung nach einem der Ansprüche 1 bis 5, dadurch gekennzeichnet, daß die vordere Flanke (11) des Bundes (6) steil ausgebildet ist.
